# EUROPEAN PATENT APPLICATION

(11) **EP 4 797 633 A1**
(43) Date of publication of application: **26.08.2026**
(21) Application number: 24896047.8
(22) Date of filing: 16.10.2024
(51) Int. Cl.: H04L 27/00, H04W 48/10, H04W 48/16

(54) **COMMUNICATION METHOD, AND APPARATUS**

(30) Priority: 01.12.2023 CN 202311648335
(71) Applicant: HUAWEI TECHNOLOGIES CO., LTD., Shenzhen 518129 (CN)
(72) Inventor: WEN, Shan, Shenzhen, Guangdong 518129 (CN); HUANG, Huang, Shenzhen, Guangdong 518129 (CN)
(74) Representative: Thun, Clemens
(86) International application number: PCT/CN2024/125288
(87) International publication number: WO 2025/112954

(57) **Abstract**

This application provides a communication method and apparatus, and relates to the field of communication technologies. A network device obtains a synchronization signal block SSB, where the SSB includes a PBCH signal and a synchronization signal, the PBCH signal is obtained by performing single-carrier modulation on a physical broadcast channel PBCH, and the synchronization signal is obtained by performing single-carrier modulation on a synchronization sequence. The network device sends the SSB. A terminal receives the SSB, and the terminal demodulates the synchronization signal and the PBCH signal. Single-carrier modulation can ensure a low peak-to-average power ratio PAPR for a signal. Therefore, in this application, both the PBCH signal and the synchronization signal in the SSB are modulated by using single-carrier modulation, which can ensure a low PAPR of the SSB.

## Description

### CROSS-REFERENCE TO RELATED APPLICATIONS

This application claims priority to Chinese Patent Application No. 202311648335.X, filed with the China National Intellectual Property Administration on December 1, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

User equipment (user equipment, UE) can communicate with a network device only after accessing a cell (cell). To access the cell, the UE needs to perform a cell search (the cell search includes signal synchronization processing and the like), to demodulate a downlink signal and transmit an uplink signal with accurate timing.

Two dedicatedly designed types of synchronization signals are used for signal synchronization processing: a primary synchronization signal (primary synchronization signal, PSS) and a secondary synchronization signal (secondary synchronization signal, SSS). The network device broadcasts the synchronization signals in each cell. If the UE detects the two types of synchronization signals, time and frequency between the network device and the UE are synchronized. Moreover, during an initial synchronization process, in addition to detecting the synchronization signals, the UE further decodes a physical broadcast channel (physical broadcast channel, PBCH) to obtain key system parameters, thereby better implementing communication with the network device.

An existing synchronization signal block (synchronization signal block, SSB) uses orthogonal frequency division multiplexing (orthogonal frequency division multiplexing, OFDM) modulation and has a high peak-to-average power ratio (peak-to-average power ratio, PAPR). However, to ensure coverage requirements of communication systems, how to ensure that an SSB has a low PAPR has not been addressed in related technologies.

### SUMMARY

This application provides a communication method and apparatus, to ensure a low PAPR of an SSB.

According to a first aspect, this application provides a communication method. The method may be performed through interaction between a terminal and a network device. The terminal may be understood as a terminal, or may be understood as a chip disposed in the terminal. This is not specifically limited herein. The terminal may be a mobile phone, a vehicle-mounted device, an internet of things device, or the like. The network device may be understood as a network device, or may be understood as a chip disposed in the network device. The network device may be a base station, a satellite, an access point, or the like. This is not specifically limited herein. The method may be applied to a 5G communication system or a communication system above 5G, or may be applied to a non-terrestrial communication system. This is not specifically limited in this application. During actual application, execution is as follows.

The network device obtains an SSB, where the SSB includes a PBCH signal and a synchronization signal, the PBCH signal is obtained by performing single-carrier modulation on a PBCH, and the synchronization signal is obtained by performing single-carrier modulation on a synchronization sequence; the network device sends the SSB; the terminal receives the SSB; and the terminal demodulates the synchronization signal and the PBCH signal.

A signal modulated by using single-carrier modulation has a lower PAPR than a signal modulated by using multi-carrier modulation represented by OFDM modulation. Therefore, in this application, both the PBCH signal and the synchronization signal in the SSB are modulated by using single-carrier modulation, to generate a low-PAPR SSB.

In an optional manner, the PBCH signal is obtained by performing single-carrier modulation on the PBCH by using a first modulation parameter. The first modulation parameter includes at least one of the following: a modulation scheme of a symbol carried on the PBCH, a bandwidth of the PBCH signal, a quantity of symbols carried on the PBCH, or a first frequency domain spectrum shaping (frequency domain spectrum shaping, FDSS) parameter.

In an optional manner, the synchronization signal is obtained in the following manner:
The network device maps the synchronization sequence into a π/2-BPSK symbol sequence based on a π/2-BPSK modulation mapper, and performs single-carrier modulation on the π/2-BPSK symbol sequence by using a second modulation parameter, to obtain the synchronization signal. The second modulation parameter includes at least one of the following: a bandwidth of the synchronization signal or a second FDSS parameter.

Because a phase difference between two adjacent symbols in the π/2-BPSK symbol sequence is limited to 90 degrees, using the π/2-BPSK symbol sequence as an input to single-carrier modulation achieves a lower PAPR for a single-carrier signal than using another input symbol sequence (for example, a quadrature phase shift keying QPSK symbol sequence). Therefore, a synchronization signal modulated by using π/2-BPSK single-carrier modulation has a low PAPR.

In an optional manner, when a modulation scheme of a symbol carried on the PBCH is π/2-BPSK modulation, a degree of bandwidth scaling of the synchronization signal is not less than a degree of bandwidth scaling of the PBCH signal. The degree of bandwidth scaling of the synchronization signal is related to the bandwidth of the synchronization signal and a quantity of symbols in the π/2-BPSK symbol sequence to which the synchronization sequence is mapped. The degree of bandwidth scaling of the PBCH signal is related to the bandwidth of the PBCH signal and the quantity of symbols carried on the PBCH.

In this manner, it can be ensured that a PAPR of a modulated synchronization signal is not higher than a PAPR of the PBCH signal. This improves communication coverage and ensures communication quality.

In an optional manner, a modulation scheme of a symbol carried on the PBCH is π/2-BPSK modulation, the PBCH signal is obtained by performing single-carrier modulation on the PBCH by using a first FDSS parameter, and the synchronization signal is obtained by performing single-carrier modulation on the synchronization sequence by using a second FDSS parameter. A degree of bandwidth scaling of the synchronization signal is equal to a degree of bandwidth scaling of the PBCH signal. The first FDSS parameter is the same as the second FDSS parameter. The degree of bandwidth scaling of the synchronization signal is related to a bandwidth of the synchronization signal and a quantity of symbols of a π/2-BPSK symbol sequence to which a synchronization sequence is mapped, and the degree of bandwidth scaling of the PBCH signal is related to a bandwidth of the PBCH signal and a quantity of symbols carried on the PBCH.

In this manner, the PBCH signal and the synchronization signal are modulated by using a same FDSS parameter. In this case, the synchronization signal may be used as a demodulation reference signal (demodulation reference signal, DMRS) of the PBCH, and no dedicated PBCH DMRS needs to be sent. This can reduce overheads, or the PBCH may indicate more information.

In an optional manner, the modulation scheme of the symbol carried on the PBCH includes one of the following: QPSK modulation, or offset quadrature phase shift keying offset-QPSK modulation, or π/2-BPSK modulation.

In an optional manner, the synchronization signal is a PSS and/or an SSS.

In an optional manner, the synchronization signal is a PSS. The synchronization sequence is a first target synchronization sequence among a plurality of preset first synchronization sequences. A quantity of the plurality of first synchronization sequences is related to a quantity of values of a physical layer cell identity 2 (denoted as ${N}_{ID}^{\left(2\right)}$). The first target synchronization sequence indicates ${N}_{ID}^{\left(2\right)}$. In this manner, the terminal may obtain ${N}_{ID}^{\left(2\right)}$ in a process of searching for the PSS.

In an optional manner, the plurality of first synchronization sequences are obtained by performing different cyclic shift processing on a preset first base synchronization sequence.

In this application, the plurality of first synchronization sequences can be obtained by performing cyclic shift processing on the first base synchronization sequence, so that information such as ${N}_{ID}^{\left(2\right)}$ is indicated by a plurality of different first synchronization sequences.

In an optional manner, shift amounts for performing different cyclic shift processing on the preset first base synchronization sequence are related to a length of the first target synchronization sequence and the quantity of the values of ${N}_{ID}^{\left(2\right)}$.

In an optional manner, the synchronization signal is an SSS. The synchronization sequence is a second target synchronization sequence among a plurality of preset second synchronization sequences. A quantity of the plurality of second synchronization sequences is related to a quantity of values of a physical layer cell identity 1 (denoted as ${N}_{ID}^{\left(1\right)}$). The second target synchronization sequence indicates ${N}_{ID}^{\left(1\right)}$.

In this manner, the terminal may obtain ${N}_{ID}^{\left(1\right)}$ in a process of searching for the SSS.

In an optional manner, the plurality of second synchronization sequences are obtained by performing different cyclic shift processing on a preset second base synchronization sequence, or the plurality of second synchronization sequences are obtained by performing different cyclic shift processing on a preset third base synchronization sequence and performing different cyclic shift processing on a preset fourth base synchronization sequence.

In this application, more second synchronization sequences can be obtained by performing cyclic shift processing on the second base synchronization sequence, or more second synchronization sequences can be obtained by performing different cyclic shift processing on the third base synchronization sequence and performing different cyclic shift processing on the fourth base synchronization sequence, so that information such as ${N}_{ID}^{\left(1\right)}$ is indicated by a plurality of different second synchronization sequences.

In an optional manner, shift amounts for performing different cyclic shift processing on the preset second base synchronization sequence, the preset third base synchronization sequence, and the preset fourth base synchronization sequence are all related to a length of the second target synchronization sequence and the quantity of the values of ${N}_{ID}^{\left(1\right)}$.

According to a second aspect, an embodiment of this application provides a communication apparatus. The communication apparatus may be a terminal (for example, the terminal or the chip disposed in the terminal, or the network device or the chip disposed in the network device in the first aspect). The communication apparatus has functions of implementing the first aspect. For example, the communication apparatus includes a corresponding module, unit, or means (means) for performing the steps in the first aspect. The function, unit, or means may be implemented by using software or hardware, or may be implemented by hardware executing corresponding software.

In a possible design, the communication apparatus includes a processing unit and a transceiver unit. The transceiver unit may be configured to send and receive a signal, to implement communication between the communication apparatus and another apparatus. For example, the transceiver unit is configured to receive a first message. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to send and receive a signal. The processor executes program instructions to complete the method according to any possible design or implementation of the first aspect. The communication apparatus may further include one or more memories. The memory is configured to be coupled to the processor. The memory may store a necessary computer program or instructions for implementing the function in the first aspect. The processor may execute the computer program or the instructions stored in the memory. When the computer program or the instructions are executed, the communication apparatus is enabled to implement the method according to any possible design or implementation of the first aspect.

In another possible design, the communication apparatus includes a processor. The processor may be configured to be coupled to a memory. The memory may store a necessary computer program or instructions for implementing the function in the first aspect. The processor may execute the computer program or the instructions stored in the memory. When the computer program or the instructions are executed, the communication apparatus is enabled to implement the method according to any possible design or implementation of the first aspect.

In another possible design, the communication apparatus includes a processor and an interface circuit. The processor is configured to: communicate with another apparatus by using the interface circuit, and perform the method according to any possible design or implementation of the first aspect.

It may be understood that, in the second aspect, the processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a third aspect, an embodiment of this application provides a communication system. The communication system includes the terminal and the network device according to the first aspect.

According to a fourth aspect, this application provides a chip system. The chip system includes a processor, and may further include a memory, to implement the method according to the first aspect. The chip system may include a chip, or may include a chip and another discrete component.

According to a fifth aspect, this application further provides a computer-readable storage medium. The computer-readable storage medium stores computer-readable instructions. When the computer-readable instructions are run on a computer, the computer is enabled to perform the method according to the first aspect.

According to a sixth aspect, this application provides a computer program product including instructions. When the computer program product is run on a computer, the computer is enabled to perform the method according to various embodiments in the first aspect.

For technical effects that can be achieved in the second aspect to the sixth aspect, refer to descriptions of the technical effects that can be achieved in the corresponding possible design solutions in the first aspect. Details are not described herein again in this application.

### BRIEF DESCRIPTION OF DRAWINGS

FIG. 1 is a diagram of a communication system according to an embodiment of this application;
FIG. 2 is a diagram of frequency responses corresponding to different roll-offs;
FIG. 3 is a diagram of bandwidth extension;
FIG. 4 is a diagram of a structure of an SSB;
FIG. 5 is a schematic flowchart of a communication method according to an embodiment of this application;
FIG. 6A and FIG. 6B are diagrams of a degree of bandwidth scaling according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise stated, "a plurality of" means two or more. Therefore, for implementations of the apparatus and the method, reference may be made to each other, and repeated parts are not described again.

The technical solutions provided in embodiments of this application may be applied to a 5G system, or applied to a future communication system or another similar communication system. In addition, the technical solutions provided in embodiments of this application may be applied to a cellular link, a public land mobile network (public land mobile network, PLMN), a machine-to-machine (machine-to-machine, M2M) network, an internet of things (internet of things, IoT) network, or another network. The technical solutions may also be applied to a link between devices, for example, a device-to-device (device-to-device, D2D) link. The D2D link may also be referred to as a sidelink (sidelink), and the sidelink may also be referred to as a side-link, a secondary link, or the like. In embodiments of this application, the foregoing terms each mean a link established between devices of a same type, and have a same meaning. The link between the devices of the same type may be a link between terminal devices, a link between base stations, a link between relay nodes, or the like. This is not limited in embodiments of this application. For the link between the terminal devices, there is a D2D link defined in the 3rd generation partnership project (3rd generation partnership project, 3GPP) release (release, Rel)-12/13, and there is also a V2X link between vehicles, between a vehicle and a mobile phone, or between a vehicle and any entity that is defined by 3GPP for the internet of vehicles, including Rel-14/15. A V2X link based on a new radio (new radio, NR) system in Rel-18 and a later release is further included.

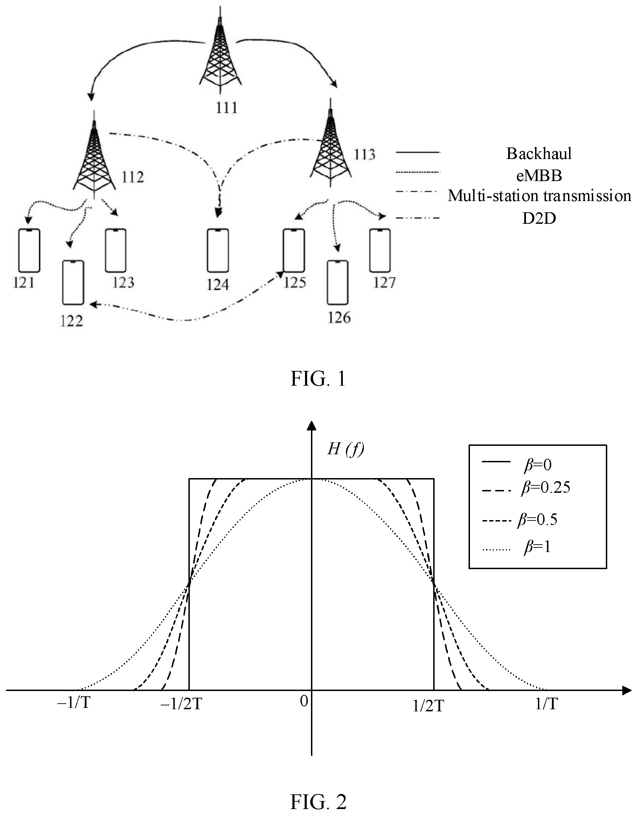

FIG. 1 is a diagram of a wireless communication system to which the present invention is applied. The wireless communication system may include at least one network device, for example, the network device 111, the network device 112, and the network device 113 shown in FIG. 1. The wireless communication system may further include at least one terminal device, for example, the terminal device 121, the terminal device 122, the terminal device 123, the terminal device 124, the terminal device 125, the terminal device 126, and the terminal device 127 shown in FIG. 1. The network device and the terminal device may communicate with each other. For example, in multi-station transmission shown in FIG. 1, the network device 112 may communicate with the terminal device 121, the terminal device 122, and the terminal device 123; and in enhanced mobile broadband (enhanced mobile broadband, eMBB) transmission shown in FIG. 1, the network device 112 and the network device 113 may communicate with the terminal device 124. Communication may also be performed between network devices. For example, in backhaul shown in FIG. 1, the network device 111 may communicate with the network device 112 and the network device 113. Communication may also be performed between terminal devices. For example, in D2D transmission shown in FIG. 1, the terminal device 122 may communicate with the terminal device 125.

The terminal device may be a wireless terminal device that can receive scheduling and indication information of the network device. The wireless terminal device may be a device that provides voice and/or data connectivity for a user, a handheld device with a wireless connection function, or another processing device connected to a wireless modem. The wireless terminal device may communicate with one or more core networks or the Internet through a radio access network (radio access network, RAN). The wireless terminal device may be a mobile terminal device like a mobile phone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges voice and/or data with the radio access network. For example, the wireless terminal device may be a personal communication service (personal communication service, PCS) telephone, a cordless telephone, a session initiation protocol (session initiation protocol, SIP) telephone, a wireless local loop (wireless local loop, WLL) station, a PDA, a tablet computer (Pad), or a computer with a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station device (subscriber station, SS), customer premises equipment (customer premises equipment, CPE), a terminal (terminal), user equipment (user equipment, UE), a mobile terminal (mobile terminal, MT), or the like. Alternatively, the wireless terminal device may be a wearable device and a next-generation communication system, for example, a terminal device in a 5G network, a terminal device in a future evolved public land mobile network (public land mobile network, PLMN), or a terminal device in an NR communication system.

The network device is an entity, such as a TRP or a gNB, for transmitting or receiving a signal on a network side. The network device may be a device for communication with a mobile device. The network device may be an AP in a wireless local area network (wireless local area network, WLAN) or a base transceiver station (base transceiver station, BTS) in a global system for mobile communications (global system for mobile communications, GSM) or code division multiple access (code division multiple access, CDMA), or may be a NodeB (NodeB, NB) in a wideband code division multiple access (wideband code division multiple access, WCDMA), or may be an evolved NodeB (evolved NodeB, eNB or eNodeB) in long-term evolution (long-term evolution, LTE), or a relay station or an access point, or a vehicle-mounted device, a wearable device, and a network device in a future 5G network or a network device in a future evolved PLMN, or a gNodeB/gNB in an NR system, or the like. In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, for example, implementing radio resource control (radio resource control, RRC), a service data adaptation protocol (service data adaptation protocol, SDAP) function, and a function of a packet data convergence protocol (packet data convergence protocol, PDCP) layer. The DU is responsible for processing a physical layer protocol and a real-time service, for example, implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. In addition, in embodiments of this application, the network device provides a service for a cell, and the terminal device communicates with the network device by using a transmission resource (for example, a frequency-domain resource, or referred to as a spectrum resource) used by the cell. The cell may be a cell corresponding to the network device (for example, a base station). The cell may belong to a macro base station, or may belong to a base station corresponding to a small cell (small cell). The small cell herein may include: a metro cell (Metro cell), a micro cell (Micro cell), a pico cell (Pico cell), a femto cell (Femto cell), and the like. These small cells have characteristics of a small coverage area and low transmit power, and are suitable for providing a high-rate data transmission service. In addition, in another possible case, the network device may be another apparatus providing a wireless communication function for the terminal device. A specific technology and a specific device form that are used by the network device are not limited in embodiments of this application. For ease of description, in embodiments of this application, an apparatus that provides a wireless communication function for a terminal device is referred to as a network device.

To better describe the solutions in this application, the following explains terms in this application.

### (1) π/2-BPSK modulation

The π/2-BPSK modulation defined in section 5.1.1 of the NR protocol 38.211 is shown in the following Formula 1: $d \left(i\right) = \frac{{e}^{i \frac{π}{2} \left(imod2\right)}}{\sqrt{2}} \left[\left(1-2b\left(i\right)\right)+j\left(1-2b\left(i\right)\right)\right]$
*b*(*i*) represents an *i*^{th} bit, *d*(*i*) represents a modulation symbol, that is, an i^{th} symbol in a π/2-BPSK symbol sequence, and *j*² = 1. The following analyzes a frequency domain signal corresponding to the π/2-BPSK symbol sequence. It is assumed that the π/2-BPSK symbol sequence {*d*(*i*)} includes *N* symbols. An *N*-point discrete Fourier transform (discrete Fourier transform, DFT) is performed on *{d(i)}* to obtain the corresponding frequency domain signal, denoted as *y*(*k*), *k* = 0,1, ... , *N -* 1.
*y*(*k*) has the following properties. Refer to Formula 2: $\begin{matrix}y \left(\frac{N}{4}-q\right) = \left[1j∗{y}^{∗}\left(\frac{N}{4}+q\right)\right] , q = 1 , … , \frac{N}{4} \\ y \left(\frac{3 N}{4}-q\right) = 1 j ∗ {y}^{∗} \left(\frac{3 N}{4}+q\right) , q = 1 , … , \frac{N}{4} - 1\end{matrix}$

A superscript * represents an operation of obtaining a conjugate of a complex number. Therefore, there are $\frac{N}{2} - 1$ redundant signals in *y*(*k*), *k* = 0,1, ... , *N -* 1. After these redundant signals are removed, *y*(*k*), *k = 0,1, ..., N* - 1 can still be recovered by using remaining $\frac{N}{2} + 1$ signals based on the relationships above.

If phase rotation shown in Formula 3 is performed on {*d*(*i*)} before DFT is performed, *d*(*i*) is obtained.

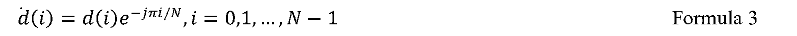

Then, the *N*-point DFT is performed on *{d(i)}* to obtain a frequency domain signal *ẏ*(*k*), *k =* 0, 1, ... ,*N* - 1.
*ẏ*(*k*) has the following properties. Refer to Formula 4: $\begin{matrix}\dot{y} \left(k\right) \left(\frac{N}{4}-1-q\right) = \left[1j∗{\dot{y}}^{∗}\left(\frac{N}{4}+q\right)\right] , q = 0 , … , \frac{N}{4} - 1 \\ \dot{y} \left(k\right) \left(\frac{3 N}{4}-1-q\right) = 1 j ∗ {\dot{y}}^{∗} \left(\frac{3 N}{4}+q\right) , q = 0 , … , \frac{N}{4} - 1\end{matrix}$

Therefore, there are $\frac{N}{2}$ redundant signals in *ẏ*(*k*), *k* = 0,1, ... , *N -* 1. After these redundant signals are removed, *ẏ*(*k*), *k =* 0,1, ... , *N -* 1 can still be recovered by using remaining $\frac{N}{2}$ signals based on the relationships above.

### (2) Reducing PAPR of a single-carrier signal through bandwidth scaling and FDSS

Before a specific technology is described, concepts of a roll-off (roll-off) and a spectrum extension factor (spectrum extension factor) are first described. The roll-off is steepness of a frequency response function with respect to frequency. Figure 2 shows frequency responses for different roll-offs (*β* = 0, 0.25, 0.5, 1). It can be seen that a frequency response in a rectangular shape is the steepest. In practice, it is difficult to implement a filter with a frequency response of a rectangular window. Using the roll-off can reduce difficulty in implementing the filter, but increases bandwidth. A roll-off factor is defined in the following Formula 5: $β = \frac{Increased bandwidth}{Bandwidth without a roll - off} = \frac{Bandwidth after extension}{Bandwidth without a roll - off} - 1$

A bandwidth without a roll-off corresponds to a bandwidth when *β* = 0. With reference to FIG. 2, it can be learned that when *β* = 1, the bandwidth is doubled. When *β* = 0.5, the bandwidth increases by 50%.

In addition, with respect to spectrum/bandwidth extension, there is also a spectrum/bandwidth extension factor (spectrum/bandwidth extension factor), which is defined in the following Formula 6: $\begin{matrix}\frac{Spectrum}{Bandwidth extension factor} = \frac{Increased bandwidth}{Bandwidth after extension} = \frac{β \times Bandwidth without roll - off}{\left(1+β\right) \times Bandwidth without roll - off} = \\ \frac{β}{\left(1+β\right)}\end{matrix}$

For example, if *β* = 1 , the spectrum/bandwidth extension factor is 0.5; and if *β* = 0.5 , the spectrum/bandwidth extension factor is 1/3.

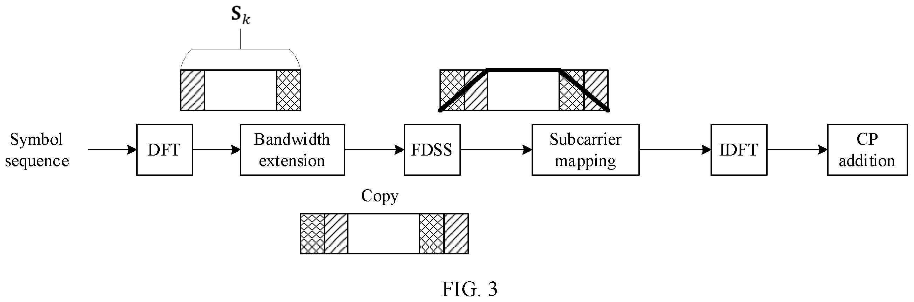

Because a pulse shaping filter with a roll-off is used, a signal modulated by using time-domain linear-convolution SC modulation has a lower PAPR than a DFT-s-OFDM signal. For DFT-s-OFDM, the PAPR may also be reduced by using a roll-off (or spectrum/bandwidth extension) and FDSS. FIG. 3 is a diagram of DFT-s-OFDM modulation with bandwidth extension and FDSS processing according to an embodiment of this application. DFT processing is performed on a symbol sequence to obtain a frequency domain signal **S***ₖ*, which is used as an input of a bandwidth extension module. FIG. 3 also provides a bandwidth extension implementation: A tail portion of the **S***ₖ* signal is copied to the front of **S***ₖ*, and a head portion signal of the **S***ₖ* signal is copied to the rear of **S***ₖ*. A signal output by the bandwidth extension module is used as an input into an FDSS module. An output of the FDSS module is equal to a dot product of the input and an FDSS coefficient. Then, processing operations of subcarrier mapping, inverse discrete Fourier transform (inverse discrete Fourier transform, IDFT), and cyclic prefix (cyclic prefix, CP) addition are performed. For example, a signal **S̃***ₖ* is obtained after bandwidth extension, an *i*^{th} value of the signal is *S̃ₖ*[*i*], a signal output by the FDSS is **S̃***ₖ*, and an *i*^{th} value of the signal is *Ṡₖ*[*i*]. A relationship between *S̃ₖ*[*i*] and *Ṡₖ*[*i*] satisfies the following Formula 7: ${\dot{S}}_{k} \left[i\right] = c \left[i\right] ⋅ {{S}^{˜}}_{k} \left[i\right]$
*c*[*i*] is an *i*^{th} FDSS coefficient.

### (3) SSB

In a 5G mobile communication system, a synchronization signal and a PBCH signal are sent together to form an SS/PBCH block, which is referred to as an SSB for short. The SSB described below in embodiments of this application may also be an SS/PBCH block. The synchronization signal (synchronization signal block, SS) includes a PSS and an SSS.

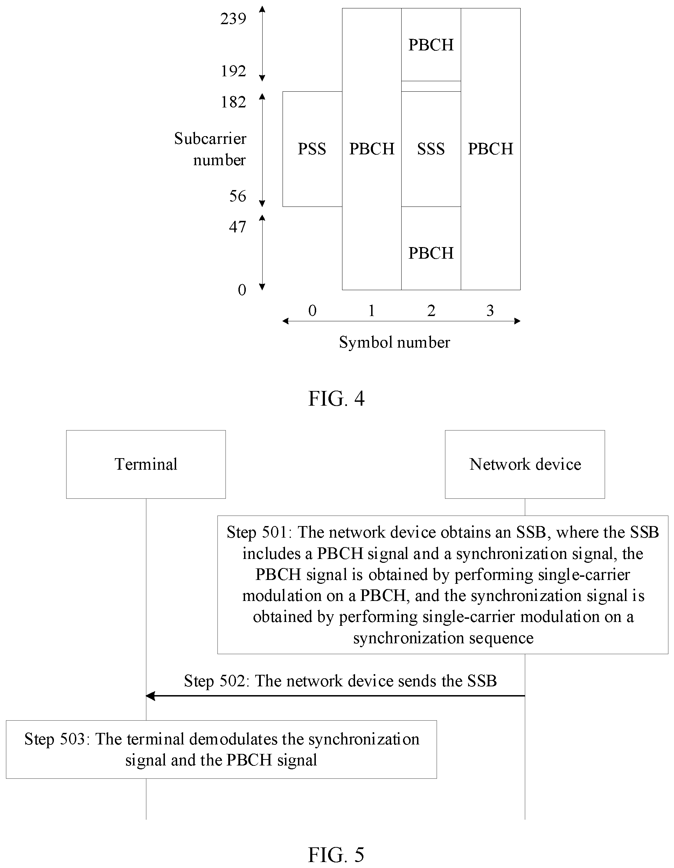

As shown in FIG. 4, in time domain, one SSB occupies four orthogonal frequency division multiplexing (orthogonal frequency division multiplexing, OFDM) symbols (symbols), which are symbols 0 to 3. In frequency domain, one SSB occupies 20 resource blocks (resource blocks, RBs) (where one RB includes 12 subcarriers), that is, 240 subcarriers, and subcarrier numbers are 0 to 239. The PSS is located on 127 subcarriers in the middle of the symbol 0, and the SSS is located on 127 subcarriers in the middle of the symbol 2. To protect the PSS and the SSS, subcarriers are separately reserved on two sides of the PSS and the SSS as guard subcarriers. For example, blank areas on two sides of the SSS in FIG. 4 are guard subcarriers. The guard subcarriers are not used to carry a signal. The PBCH occupies all subcarriers of the symbol 1 and the symbol 3, and occupies some of remaining subcarriers other than subcarriers occupied by the SSS in all subcarriers of the symbol 2 (namely, subcarriers other than the guard subcarriers in the remaining subcarriers).

The PSS may indicate a physical layer cell identity 2 (denoted as ${N}_{ID}^{\left(2\right)}$), and the SSS may indicate a physical layer cell identity 1 (denoted as ${N}_{ID}^{\left(1\right)}$). ${N}_{ID}^{\left(2\right)}$ and ${N}_{ID}^{\left(1\right)}$ jointly determine a plurality of physical cell identities (physical cell identities, PCIs) in a 5G communication system. Once a terminal successfully finds the PSS and the SSS, the terminal knows a physical cell identity of this 5G carrier, and therefore, has a capability of parsing a system message included in the SSB.

An existing SSB uses OFDM for modulation, and therefore has a high PAPR. However, no solution is proposed in a related technology to ensure a low PAPR of the SSB to meet a coverage requirement of a communication system. Based on this, this application provides a communication method, to ensure a low PAPR of the SSB. With reference to FIG. 5, the method may be performed through interaction between a terminal and a network device. The terminal may be understood as a terminal, or may be understood as a chip disposed in the terminal. This is not specifically limited herein. The terminal may be a mobile phone, a vehicle-mounted device, an internet of things device, or the like. The network device may be understood as a network device, or may be understood as a chip disposed in the network device. The network device may be a base station, a satellite, an access point, or the like. The method may be applied to a 5G communication system or a communication system above 5G, or may be applied to a non-terrestrial communication system. This is not specifically limited in this application. During actual application, execution is as follows.

Step 501: The network device obtains an SSB. The SSB includes a PBCH signal and a synchronization signal. The PBCH signal is obtained by performing single-carrier modulation on a PBCH, and the synchronization signal is obtained by performing single-carrier modulation on a synchronization sequence.

With reference to FIG. 4, it can be learned that the SSB includes the PBCH signal and the synchronization signal (a PSS and an SSS). In this application, the network device may obtain the PBCH signal by performing single-carrier modulation on the PBCH, or may reuse a PBCH signal modulated by another network device. For example, a base station 1 and a base station 2 are co-deployed, and the base station 1 has generated a PBCH signal. In this case, the base station 2 may directly obtain the PBCH signal by exchanging data with the base station 1, without a need to perform single-carrier modulation on the PBCH. This can reduce data processing operations of the base station 2, and improve data processing efficiency. In this application, the network device may obtain the synchronization signal by performing single-carrier modulation on the synchronization sequence (the synchronization sequence is constructed by using one of the following: an m-sequence, a Gold sequence, or a Golay sequence, and which sequence used for the construction is not specifically limited herein), or may reuse a synchronization signal modulated by another network device. For understanding, refer to descriptions of the PBCH signal. Details are not described herein again. A single-carrier modulation technology is, for example, DFT-s-OFDM modulation, time-domain linear-convolution single carrier (single carrier, SC) modulation, SC-FDE (single carrier-frequency domain equalization), or the like. This is not specifically limited herein.

Certainly, during actual application, further processing may be performed during single-carrier modulation on the PBCH and the synchronization sequence (different synchronization sequences may be used for different synchronization signals) based on the foregoing (1) and (2), to reduce PAPRs of the PBCH signal and the synchronization signal. The following describes single-carrier modulation based on (1) and (2).

Specifically, the PBCH signal is obtained by performing single-carrier modulation on the PBCH by using a first modulation parameter. The first modulation parameter includes at least one of the following: a modulation scheme of a symbol carried on the PBCH, a bandwidth of the PBCH signal, a quantity of symbols carried on the PBCH, or a first FDSS parameter. The modulation scheme of the symbol carried on the PBCH includes one of the following: QPSK modulation, offset-QPSK modulation, or π/2-BPSK modulation.

In an optional manner, the network device maps the synchronization sequence into a π/2-BPSK symbol sequence based on a π/2-BPSK modulation mapper, and performs single-carrier modulation on the π/2-BPSK symbol sequence by using a second modulation parameter, to obtain the synchronization signal. The second modulation parameter includes at least one of the following: a bandwidth of the synchronization signal or a second FDSS parameter. Because a phase difference between two adjacent symbols in the π/2-BPSK symbol sequence is limited to 90 degrees, using the π/2-BPSK symbol sequence as an input to single-carrier modulation achieves a lower PAPR for a single-carrier signal than using another input symbol sequence (for example, a QPSK symbol sequence). Therefore, a synchronization signal modulated by using π/2-BPSK single-carrier modulation has a low PAPR.

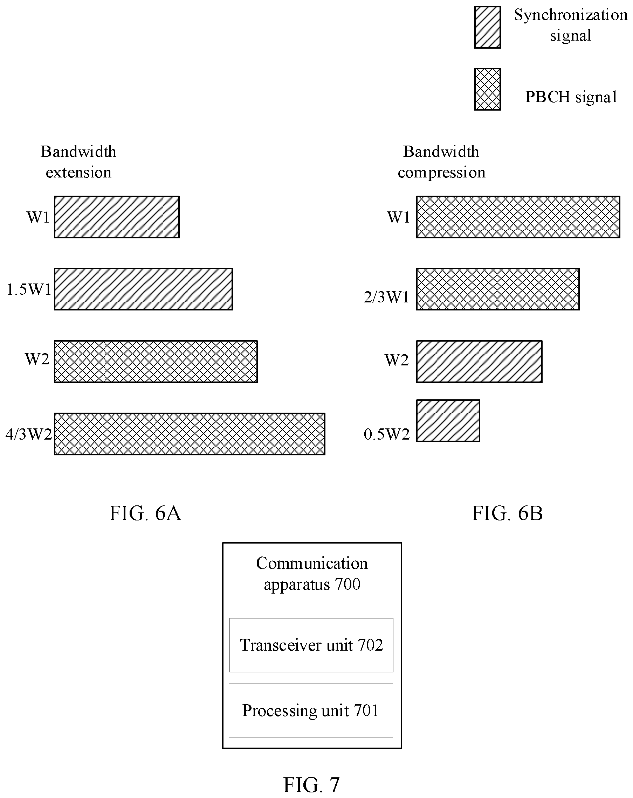

In addition, during actual application, the synchronization signal has a lower PAPR than the PBCH signal, which helps improve coverage of a communication system. Specifically, when the modulation scheme of the symbol carried on the PBCH is QPSK modulation or offset-QPSK modulation, and when the synchronization sequence is modulated by using π/2-BPSK modulation, it can be ensured that the PAPR of the synchronization signal is not higher than the PAPR of the PBCH signal. When the modulation scheme of the symbol carried on the PBCH is π/2-BPSK modulation, a bandwidth extension degree of the synchronization signal is not less than (greater than or equal to) a bandwidth extension degree of the PBCH signal, or a bandwidth compression degree of the synchronization signal is not greater than (less than or equal to) a bandwidth compression degree of the PBCH signal. In this way, it can be ensured that a PAPR of a modulated synchronization signal is not greater than the PAPR of the PBCH signal. A compression situation needs to be considered because a frequency domain signal corresponding to the π/2-BPSK symbol sequence has redundancy. After a redundant portion is removed, a complete frequency domain signal can still be recovered, thereby improving spectral efficiency without a transmission performance loss. A process of removing the redundant portion may be understood as bandwidth compression. For example, as shown in FIG. 6A, an initial bandwidth of the synchronization signal is W1, and after bandwidth extension processing, the bandwidth is extended to 1.5W1. In this case, the bandwidth extension degree of the synchronization signal is 50.0% (1.5-1=0.5). An initial bandwidth of the PBCH signal is W2, and after bandwidth extension processing, the bandwidth of the PBCH signal is extended to 4/3W2. In this case, the bandwidth extension degree of the PBCH signal is 33.3% (4/3-1=1/3). Therefore, the bandwidth extension degree of the synchronization signal is greater than the bandwidth extension degree of the PBCH signal. As shown in FIG. 6B, the initial bandwidth of the synchronization signal is W1, and after bandwidth compression processing, the bandwidth is compressed to 2/3W1. In this case, the bandwidth compression degree of the synchronization signal is 33.3% (1-2/3=1/3). The initial bandwidth of the PBCH signal is W2, and after bandwidth compression processing, the bandwidth is compressed to 0.5W2. In this case, the bandwidth compression degree of the PBCH signal is 50% (1-0.5=0.5). Therefore, the bandwidth compression degree of the synchronization signal is less than the bandwidth compression degree of the PBCH signal.

As described above, a bandwidth scaling (extension or compression) degree of the synchronization signal is related to the bandwidth of the synchronization signal and a quantity of symbols in the π/2-BPSK symbol sequence to which the synchronization sequence is mapped (in other words, the degree of bandwidth scaling of the synchronization signal may be determined based on the bandwidth of the synchronization signal and the quantity of symbols in the π/2-BPSK symbol sequence to which the synchronization sequence is mapped; moreover, for π/2-BPSK modulation, because one bit is mapped to one π/2-BPSK symbol, the quantity of symbols in the π/2-BPSK symbol sequence may also be described as a length of the synchronization sequence; and therefore, the degree of bandwidth scaling of the synchronization signal is related to the bandwidth of the synchronization signal and the length of the synchronization sequence). A degree of bandwidth scaling of the PBCH signal is related to the bandwidth of the PBCH signal and the quantity of symbols carried on the PBCH (in other words, the degree of bandwidth scaling of the PBCH signal may be determined based on the bandwidth of the PBCH signal and the quantity of symbols carried on the PBCH).

Specifically, the degree of bandwidth scaling of the synchronization signal (which may be understood as a degree of bandwidth scaling of the PSS, or may be understood as a degree of bandwidth scaling of the SSS; this is not specifically limited herein) may be determined based on Formula 8, and the degree of bandwidth scaling of the PBCH signal may be determined based on Formula 9. $α 1 = \frac{Δ F 1}{N 1} - γ 1$
α1 represents the degree of bandwidth scaling of the synchronization signal. Δ*F*1 represents a quantity of subcarriers corresponding to the bandwidth of the synchronization signal. *N*1 represents the quantity of symbols in the π/2-BPSK symbol sequence or the length of the synchronization sequence. *γ*1 is a constant, which may be 1, -1, or the like. During actual application, a value of *γ*1 may be flexibly adjusted. For example, during actual production application, a sign of α1 is preferably used to determine bandwidth extension and bandwidth compression. To be specific, α1 being greater than zero corresponds to bandwidth extension, and α1 being less than zero corresponds to bandwidth compression. To meet this requirement, *γ*1 may be set to 1. $α 2 = \frac{Δ F 2}{N 2} - γ 1$
α2 represents the degree of bandwidth scaling of the PBCH signal. Δ*F*2 represents a quantity of subcarriers corresponding to the PBCH bandwidth. *N*2 represents a quantity of symbols in a symbol sequence obtained through PBCH symbol modulation on the PBCH. For example, during actual production application, a sign of α2 is preferably used to determine bandwidth extension and bandwidth compression. To be specific, α2 being greater than zero corresponds to bandwidth extension, and α2 being less than zero corresponds to bandwidth compression. To meet this requirement, *γ*1 may be set to 1. In the foregoing Formula 8 and Formula 9, values of *γ*1 are the same.

It is assumed that π/2-BPSK modulation is used and *γ*1 = 1. With reference to (1), it can be learned that if phase rotation shown in Formula 3 is performed on the π/2-BPSK symbol sequence before DFT, a minimum bandwidth compression degree may be -0.5.

To ensure that the PAPR of the synchronization signal is not higher than the PAPR of the PBCH signal, the degree of bandwidth scaling of the synchronization signal is usually not less than the degree of bandwidth scaling of the PBCH signal (which is equivalent to that the bandwidth extension degree of the synchronization signal is greater than or equal to the bandwidth extension degree of the PBCH signal, and that the bandwidth compression degree of the synchronization signal is less than or equal to the bandwidth compression degree of the PBCH signal).

In addition, when a modulation scheme of a symbol carried on the PBCH is π/2-BPSK modulation, the PBCH signal is obtained by performing single-carrier modulation on the PBCH by using a first FDSS parameter; the synchronization signal is obtained by performing single-carrier modulation on the synchronization sequence by using a second FDSS parameter; a degree of bandwidth scaling of the synchronization signal is equal to a degree of bandwidth scaling of the PBCH signal; and the first FDSS parameter is the same as the second FDSS parameter. In this manner, the PBCH signal and the synchronization signal are modulated by using a same FDSS parameter. In this case, the synchronization signal may be used as a DMRS of the PBCH, and no dedicated PBCH DMRS needs to be sent. This reduces overheads, or the PBCH may indicate more information.

Step 502: The network device sends the SSB. Correspondingly, the terminal receives the SSB.

Step 503: The terminal demodulates the synchronization signal and the PBCH signal.

Specifically, after demodulating the synchronization signal and the PBCH signal, the terminal can better implement signal synchronization between the terminal and the network device. In addition, during actual application, to improve cell coverage, π/2-BPSK single-carrier modulation may also be used for reference signals such as a CSI-RS, an SRS, a TRS, a PRS, and a RACH.

In this application, a signal modulated by using single-carrier modulation has a lower PAPR than a signal modulated by using multi-carrier modulation represented by OFDM modulation. Therefore, in this application, both the PBCH signal and the synchronization signal in the SSB are modulated by using single-carrier modulation, to generate a low-PAPR SSB.

With reference to (3), it can be learned that the PSS may be used to indicate ${N}_{ID}^{\left(2\right)}$, the SSS may be used to indicate ${N}_{ID}^{\left(1\right)}$, and ${N}_{ID}^{\left(2\right)}$ and ${N}_{ID}^{\left(1\right)}$ jointly determine the plurality of PCIs in the 5G communication system. Once the terminal successfully finds the PSS and the SSS, the terminal knows the physical cell identity of this 5G carrier, and therefore, has a capability of parsing a system message included in the SSB. The following describes how to indicate a physical layer cell identity by using a synchronization sequence for different synchronization signals in different cases.

### Case 1: PSS as the synchronization signal

The synchronization sequence is a first target synchronization sequence among a plurality of preset first synchronization sequences. A quantity of the plurality of first synchronization sequences is related to a quantity of values of ${N}_{ID}^{\left(2\right)}$. The first target synchronization sequence indicates ${N}_{ID}^{\left(2\right)}$.

For example, if the quantity of the values of ${N}_{ID}^{\left(2\right)}$ is N1, the quantity of the first synchronization sequences is also N1. During actual application, one synchronization sequence (namely, the first target synchronization sequence) of the N1 first synchronization sequences may be selected for single-carrier modulation to obtain the PSS. The first synchronization sequence may be used to indicate ${N}_{ID}^{\left(2\right)}$. Alternatively, the plurality of first synchronization sequences may be obtained by performing different cyclic shift processing on a preset first base synchronization sequence, and a shift amount is related to ${N}_{ID}^{\left(2\right)}$. Reference may be made to PSS construction in a related technology for understanding. In a related technology, the PSS is obtained by performing BPSK OFDM modulation on the synchronization sequence. The first base synchronization sequence is an m-sequence with a length of 127. Three synchronization sequences are generated through cyclic shift, and cyclic shift amounts corresponding to the three synchronization sequences are 0, 43, and 86 respectively. In a related technology, ${N}_{ID}^{\left(2\right)} ∈ \left\{0, 1, 2\right\}$. Therefore, the cyclic shift amount may be understood as $43 {N}_{ID}^{\left(2\right)}$. That is, the PSS implements a correlation with ${N}_{ID}^{\left(2\right)}$ by using a design of the cyclic shift amount.

In this application, shift amounts for performing different cyclic shift processing on the preset first base synchronization sequence are related to a length of the first target synchronization sequence and the quantity of the values of ${N}_{ID}^{\left(2\right)}$. The shift amounts satisfy the following Formula 10, Formula 11, and Formula 12: $i \left⌈\frac{N 1}{{P}_{PSS}}\right⌉ , and \left({P}_{PSS}-1\right) \left⌈\frac{N 1}{{P}_{PSS}}\right⌉ < N 1$ or $i \left⌊\frac{N 1}{{P}_{PSS}}\right⌋$ or $i ∗ round \left(\frac{N 1}{{P}_{PSS}}\right) , and \left({P}_{PSS}-1\right) ∗ round \left(\frac{N 1}{{P}_{PSS}}\right) < N 1$$\left⌈⋅\right⌉$ represents rounding up; $\left⌊⋅\right⌋$ represents rounding down; round(·) represents rounding off; N1 represents the length of the first target synchronization sequence; *P_{PSS}* represents the quantity of the values of ${N}_{ID}^{\left(2\right)}$; 0 ≤ *i* ≤ *P*_{PSS} - 1; and *N1* ≥ *P*_{PSS}*.* It should be understood that, provided that the shift amount is less than *N1,* a constant may be added to the foregoing Formula 10 to Formula 12 (for example, $i \left⌈\frac{N 1}{{P}_{PSS}}\right⌉$), for example, $i \left⌈\frac{N 1}{{P}_{PSS}}\right⌉ + X 1$, where *X*1 is an integer.

For example, if the length of the first target synchronization sequence is 127, and a quantity of possible values of ${N}_{ID}^{\left(2\right)}$ is 3, then the shift amounts may be 0, 43, and 86 (rounding up is used), or 0, 42, and 84 (rounding down or rounding off is used). If the length of the first target synchronization sequence is 511, and the quantity of the possible values of ${N}_{ID}^{\left(2\right)}$ is 4, the cyclic shift amounts may be 0, 128, 256, and 384 (rounding up or rounding off is used) or 0, 127, 254, and 381 (rounding down is used).

In addition, different first synchronization sequences may be used to indicate different ${N}_{ID}^{\left(2\right)}$ values. For example, *P*_{PSS} = 3, and three different m-sequences are used. Different m-sequences have different generator polynomials, and initial values of the m-sequences may be the same or different. It should be understood that, it is assumed that *s*₀ and *s*₁ are two m-sequences that have a same generator polynomial but different initial values; and if lengths *N* of the two sequences are equal to a power of 2 minus 1, for example, 127, then *s*₁ may be considered as a cyclic shift of *s*₀. In this case, *s*₀ and *s*₁ cannot be referred to as two different first synchronization sequences.

As mentioned above, the synchronization signal, namely, the PSS, may be used as the PBCH DMRS, so that the PBCH DMRS does not need to be separately designed. In this case, the PSS may further need to indicate SSB index information.

### Case 2: SSS as the synchronization signal

The synchronization sequence is a second target synchronization sequence of a plurality of preset second synchronization sequences, and a quantity of the plurality of second synchronization sequences is related to a quantity of values of ${N}_{ID}^{\left(1\right)}$. The second target synchronization sequence indicates ${N}_{ID}^{\left(1\right)}$. For example, if the quantity of the values of ${N}_{ID}^{\left(1\right)}$ is N2, the quantity of the second synchronization sequences is also N2. During actual application, one synchronization sequence of the N2 second synchronization sequences may be selected for single-carrier modulation to obtain the SSS. The second synchronization sequence may be used to indicate ${N}_{ID}^{\left(1\right)}$.

Different second target synchronization sequences may be used to indicate different ${N}_{ID}^{\left(1\right)}$ values. For example, the second target synchronization sequence is an NR Gold sequence or a Golay sequence. Different NR Gold sequences or Golay sequences may have different initial values. A quantity of initial values is the same as a quantity of possible values of ${N}_{ID}^{\left(1\right)}$.

Similar to the first synchronization sequence, the plurality of second synchronization sequences may also be obtained by performing different cyclic shift processing on a preset second base synchronization sequence.

In this application, shift amounts for performing different cyclic shift processing on the preset second base synchronization sequence and a preset third base synchronization sequence are related to a length of the second target synchronization sequence and the quantity of the values of ${N}_{ID}^{\left(1\right)}$. The shift amounts satisfy the following Formula 13, Formula 14, and Formula 15: $i \left⌈\frac{N 2}{{P}_{SSS}}\right⌉ , \left({P}_{SSS}-1\right) \left⌈\frac{N 2}{{P}_{SSS}}\right⌉ < N 2$ or $i \left⌊\frac{N 2}{{P}_{SSS}}\right⌋$ or $i ∗ round \left(\frac{N 2}{{P}_{SSS}}\right) , and \left({P}_{SSS}-1\right) ∗ round \left(\frac{N 2}{{P}_{SSS}}\right) < N 2$ $\left⌈⋅\right⌉$ represents rounding up; $\left⌊⋅\right⌋$ represents rounding down; round(·) represents rounding off; N2 represents the length of the second target synchronization sequence; *P*_{SSS} represents the quantity of the values of ${N}_{ID}^{\left(1\right)}$; 0 ≤ *i* ≤ *P*_{SSS} - 1; and *N*2 ≥ *P*_{SSS}.

For example, the length of the second target synchronization sequence is 511, and the quantity of the possible values of ${N}_{ID}^{\left(1\right)}$ is 335. If rounding down is used, the shift amounts may be 0, 1, 2, ..., and 335.

It should be understood that, provided that the shift amount is less than *N2,* a constant may be added to the shift amount (for example, $i \left⌈\frac{N 2}{{P}_{SSS}}\right⌉$) in the foregoing Formula 13 to Formula 15, for example, $i \left⌈\frac{N 2}{{P}_{SSS}}\right⌉ + X 2$, where *X2* is an integer.

Due to periodicity of a cyclic shift, a sequence with a length of N generates a maximum of N different sequences with a length of N through the cyclic shift. Therefore, when *N*2 < *P*_{SSS}, performing the cyclic shift on the second base synchronization sequence is insufficient to generate *P*_{SSS} second synchronization sequences. For this case, in this application, the plurality of second synchronization sequences may alternatively be obtained by performing different cyclic shift processing on a preset third base synchronization sequence and different cyclic shift processing on a preset fourth base synchronization sequence. The third base synchronization sequence cannot be obtained by performing a cyclic shift on the fourth base synchronization sequence. For example, lengths of both the third base synchronization sequence and the fourth base synchronization sequence are N2, which are the same as the length of the second synchronization sequence. The third sequence is obtained by performing cyclic shift processing on the third base synchronization sequence, and a fourth sequence is obtained by performing cyclic shift processing on the fourth base synchronization sequence. The second synchronization sequence may be, for example, a modulo-2 sum of the third sequence and the fourth sequence.

It is assumed that the third base synchronization sequence and the fourth base synchronization sequence are respectively denoted as *s*₀ and *s*₁. A combination of cyclic shifts (*m*₀, *m*₁) of the third sequence (*s*₀ corresponding to a cyclic shift amount of *m*₀) and the fourth sequence (*s*₁ corresponding to a cyclic shift amount of *m*₁) indicates ${N}_{ID}^{\left(1\right)}$, as shown in the following Formula 16: $\begin{matrix}c \left(n\right) = \left({s}_{0}\left(\left(n+{m}_{0}\right)mod N\right)+{s}_{1}\left(\left(n+{m}_{1}\right)mod N\right)\right) mod 2 \\ {m}_{0} = a ∗ b ∗ \left⌊\frac{{N}_{ID}^{\left(1\right)}}{d}\right⌋ + b ∗ {N}_{ID}^{\left(2\right)} \\ {m}_{1} = {N}_{ID}^{\left(1\right)} mod d \\ 0 \leq n < N - 1\end{matrix}$

An integer d is equal to *P*_{SSS}/*P*_{PSS}; and *a* is a positive integer, and is equal to a maximum possible value of ${N}_{ID}^{\left(2\right)}$ plus 1. It should be noted that an appropriate design of the positive integer b can reduce correlation between SSS sequences when there is a residual frequency offset. In addition, if the PSS uses *s*₀ and a cyclic shift of *s*₀ to indicate ${N}_{ID}^{\left(2\right)}$, *m*₀ being related to ${N}_{ID}^{\left(2\right)}$ may reduce a probability of a PCI detection error.

It should be understood that if both the lengths of the third base synchronization sequence and the fourth base synchronization sequence are N, and the third base synchronization sequence cannot be obtained by performing a cyclic shift on the fourth base synchronization sequence, then there are a maximum of N squared second synchronization sequences.

As mentioned above, it is possible to use the synchronization signal, namely, the SSS, as the PBCH DMRS. In this way, no separate PBCH DMRS is required. In an existing NR protocol, a PBCH DMRS indicates some or all SSB index information. In this case, if the SSS is used as the PBCH DMRS, the SSS may further need to indicate some or all of the SSB index information.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

When an integrated unit is used, FIG. 7 is a possible example block diagram of a communication apparatus according to an embodiment of this application. As shown in FIG. 7, a communication apparatus 700 may include a processing unit 701 and a transceiver unit 702. The processing unit 701 is configured to control and manage an action of the communication apparatus 700. The transceiver unit 702 is configured to support communication between the communication apparatus 700 and another device. Optionally, the transceiver unit 702 may include a receiving unit and/or a sending unit that are respectively configured to perform a receiving operation and a sending operation. Optionally, the communication apparatus 700 may further include a storage unit, configured to store program code and/or data of the communication apparatus 700. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the foregoing terminal device, the network device, or the like.

In an embodiment, the communication apparatus 700 is a network device. The processing unit 701 is configured to obtain an SSB. The SSB includes a PBCH signal and a synchronization signal. The PBCH signal is obtained by performing single-carrier modulation on a PBCH, and the synchronization signal is obtained by performing single-carrier modulation on a synchronization sequence. The transceiver unit 702 is configured to send the SSB.

In another embodiment, the communication apparatus 700 is a terminal. The transceiver unit 702 is configured to receive an SSB. The SSB includes a PBCH signal and a synchronization signal. The PBCH signal is obtained by performing single-carrier modulation on a PBCH, and the synchronization signal is obtained by performing single-carrier modulation on a synchronization sequence. The processing unit 701 is configured to demodulate the synchronization signal and the PBCH signal.

In an optional manner, the PBCH signal is obtained by performing single-carrier modulation on the PBCH by using a first modulation parameter. The first modulation parameter includes at least one of the following: a modulation scheme of a symbol carried on the PBCH, a bandwidth of the PBCH signal, a quantity of symbols carried on the PBCH, or a first FDSS parameter.

In an optional manner, the processing unit 701 of the network device is specifically configured to: map the synchronization sequence into a π/2-BPSK symbol sequence based on a π/2-BPSK modulation mapper, and perform single-carrier modulation on the π/2-BPSK symbol sequence by using a second modulation parameter, to obtain the synchronization signal. The second modulation parameter includes at least one of the following: a bandwidth of the synchronization signal or a second FDSS parameter.

In an optional manner, when the modulation scheme of the symbol carried on the PBCH is π/2-BPSK modulation, a degree of bandwidth scaling of the synchronization signal is not less than a degree of bandwidth scaling of the PBCH signal. The degree of bandwidth scaling of the synchronization signal is related to the bandwidth of the synchronization signal and a quantity of symbols in the π/2-BPSK symbol sequence to which the synchronization sequence is mapped. The degree of bandwidth scaling of the PBCH signal is related to the bandwidth of the PBCH signal and the quantity of symbols carried on the PBCH.

In an optional manner, the modulation scheme of the symbol carried on the PBCH is π/2-BPSK modulation, the PBCH signal is obtained by performing single-carrier modulation on the PBCH by using a first FDSS parameter, and the synchronization signal is obtained by performing single-carrier modulation on the synchronization sequence by using a second FDSS parameter. A degree of bandwidth scaling of the synchronization signal is equal to a degree of bandwidth scaling of the PBCH signal. The first FDSS parameter is the same as the second FDSS parameter. The degree of bandwidth scaling of the synchronization signal is related to a bandwidth of the synchronization signal and a quantity of symbols of a π/2-BPSK symbol sequence to which a synchronization sequence is mapped, and the degree of bandwidth scaling of the PBCH signal is related to a bandwidth of the PBCH signal and a quantity of symbols carried on the PBCH.

In an optional manner, the modulation scheme of the symbol carried on the PBCH includes one of the following: QPSK modulation, offset-QPSK modulation, or π/2-BPSK modulation.

In an optional manner, the synchronization signal is a PSS and/or an SSS.

In an optional manner, the synchronization signal is a PSS. The synchronization sequence is a first target synchronization sequence among a plurality of preset first synchronization sequences. A quantity of the plurality of first synchronization sequences is related to a quantity of values of a physical layer cell identity 2. The first target synchronization sequence indicates the physical layer cell identity 2.

In an optional manner, the plurality of first synchronization sequences are obtained by performing different cyclic shift processing on a preset first base synchronization sequence.

In an optional manner, shift amounts for performing different cyclic shift processing on the preset first base synchronization sequence are related to a length of the first target synchronization sequence and the quantity of the values of the physical layer cell identity 2.

In an optional manner, the synchronization signal is an SSS. The synchronization sequence is a second target synchronization sequence among a plurality of preset second synchronization sequences. A quantity of the plurality of second synchronization sequences is related to a quantity of values of a physical layer cell identity 1. The second target synchronization sequence indicates the physical layer cell identity 1.

In an optional manner, the plurality of second synchronization sequences are obtained by performing different cyclic shift processing on a preset second base synchronization sequence, or the plurality of second synchronization sequences are obtained by performing different cyclic shift processing on a preset third base synchronization sequence and performing different cyclic shift processing on a preset fourth base synchronization sequence.

In an optional manner, shift amounts for performing different cyclic shift processing on the preset second base synchronization sequence, the preset third base synchronization sequence, and the preset fourth base synchronization sequence are all related to a length of the second target synchronization sequence and the quantity of the values of the physical layer cell identity 1.

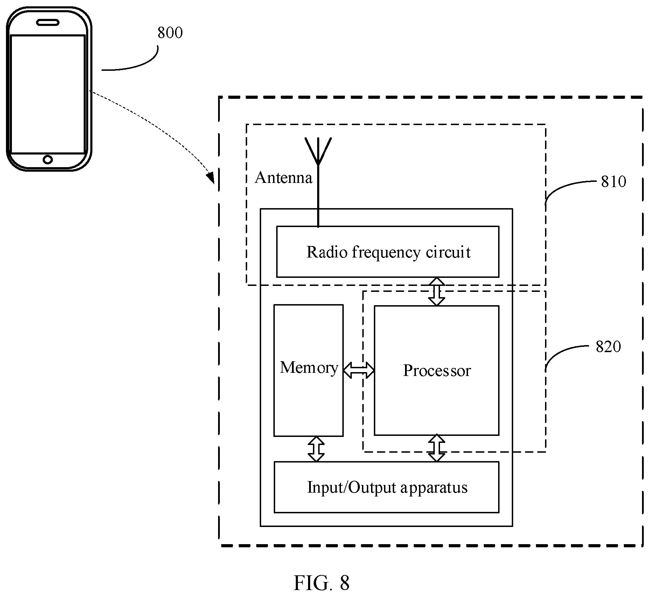

In addition, FIG. 8 is a diagram of a structure of a simplified terminal device according to this application. For ease of understanding and figure illustration, an example in which a terminal is a mobile phone is used in FIG. 8. As shown in FIG. 8, the terminal includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to send and receive a radio frequency signal in a form of an electromagnetic wave.

The input/output apparatus, such as a touchscreen, a display, or a keyboard, is mainly configured to receive data input by a user and output data to the user.

It should be noted that some types of terminal devices may have no input/output apparatus.

When data needs to be sent, the processor performs baseband processing on the to-be-sent data, and then outputs a baseband signal to the radio frequency circuit. After performing radio frequency processing on the baseband signal, the radio frequency circuit sends a radio frequency signal in a form of an electromagnetic wave to the outside through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, only one memory and one processor are shown in FIG. 8. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 8, a terminal 800 includes a transceiver unit 810 and a processing unit 820. The transceiver unit 810 may also be referred to as a transceiver, a transceiver machine, a transceiver apparatus, or the like. The processing unit 820 may also be referred to as a processor, a processing board, a processing module, a processing apparatus, or the like.

Optionally, a component configured to implement the receiving function in the transceiver unit 810 may be considered as a receiving unit, and a component configured to implement the sending function in the transceiver unit 810 may be considered as a sending unit. That is, the transceiver unit 810 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that, the transceiver unit 810 is configured to perform a sending operation and a receiving operation of the terminal device in the foregoing method embodiments, and the processing unit 820 is configured to perform operations other than the receiving and sending operations on the terminal device in the foregoing method embodiments.

When the terminal device is a chip, the chip includes the transceiver unit 810 and the processing unit 820. The transceiver unit 810 may be an input/output circuit or a communication interface. The processing unit 820 is a processor, a microprocessor, an integrated circuit, or a logic circuit integrated on the chip.

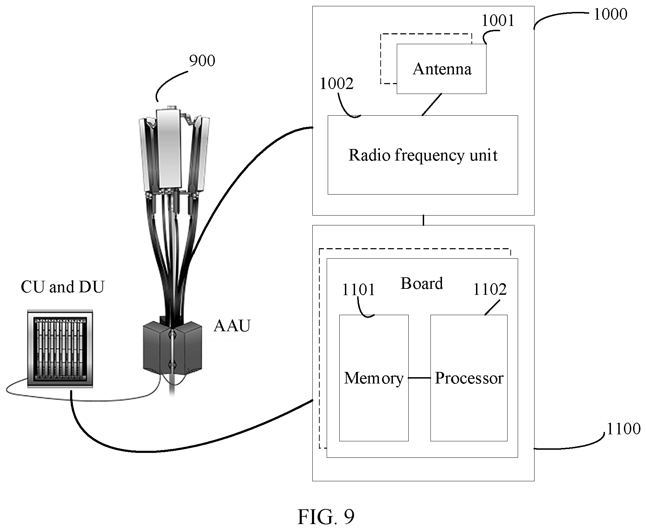

This application further provides a network device. FIG. 9 is a diagram of a structure of a network device 900 according to an embodiment of this application. The network device 900 may be applied to the system shown in FIG. 1. For example, the network device 900 may be the network device in the system shown in FIG. 1, and is configured to perform the functions of the network device in the foregoing method embodiments. It should be understood that the following is merely an example. In a future communication system, the network device may have another form and composition.

For example, in a 5G communication system, the network device 900 may include a CU, a DU, and an AAU. In comparison with a network device in an LTE communication system that includes one or more radio frequency units, for example, a remote radio unit (remote radio unit, RRU) and one or more building baseband units (building baseband units, BBUs),
a non-real-time part of an original BBU is split off and redefined as the CU, which is responsible for processing a non-real-time protocol and service, some physical layer processing functions of the BBU are combined with an original RRU and a passive antenna into the AAU, and remaining functions of the BBU are redefined as the DU, which is responsible for processing a physical layer protocol and a real-time service. In short, the CU and the DU are distinguished based on real-time performance of processing content, and the AAU is a combination of the RRU and the antenna.

The CU, the DU, and the AAU may be deployed separately or together. Therefore, there may be a plurality of network deployment forms. A possible deployment form, as shown in FIG. 9, is consistent with that of a conventional 4G network device. The CU and the DU are deployed on same hardware. It should be understood that FIG. 9 is merely an example, and constitutes no limitation on the protection scope of this application. For example, a deployment form may alternatively be that DUs are deployed in a BBU equipment room, CUs or DUs are deployed together, or CUs are centralized at a higher level.

An AAU 1000 may implement a transceiver function corresponding to the transceiver unit 702 in FIG. 7. Optionally, the AAU 1800 may also be referred to as a transceiver machine, a transceiver circuit, a transceiver, or the like, and may include at least one antenna 1001 and a radio frequency unit 1002. Optionally, the AAU 1000 may include a receiving unit and a sending unit. The receiving unit may correspond to a receiver (or referred to as a receiving machine or a receiving circuit), and the sending unit may correspond to a transmitter (or referred to as a transmitter machine or a transmitter circuit). CU and DU 1100 may implement an internal processing function corresponding to the processing unit 701 in FIG. 7. Optionally, the CU and DU 1100 may control the network device or the like, and may be referred to as controllers. The AAU, the CU, and the DU may be physically disposed together, or may be physically disposed separately.

In addition, the network device is not limited to the form shown in FIG. 9, and may alternatively be in another form, for example, includes a BBU and an adaptive radio unit (adaptive radio unit, ARU), or includes a BBU and an AAU; or may be customer premises equipment (customer premises equipment, CPE), or may be in another form. This is not limited in this application.

In an example, the CU and DU 1100 may include one or more boards. A plurality of boards may jointly support a radio access network (for example, an LTE network) of a single access standard, or may respectively support radio access networks (for example, an LTE network, a 5G network, a future network, or another network) of different access standards. The CU and DU 1100 further includes a memory 1101 and a processor 1102. The memory 1101 is configured to store necessary instructions and data. The processor 1102 is configured to control the network device to perform a necessary action, for example, is configured to control the network device to perform an operation procedure related to the network device in the foregoing method embodiments. The memory 1101 and the processor 1102 may serve one or more boards. In other words, a memory and a processor may be disposed on each board. Alternatively, a plurality of boards may share a same memory and a same processor. In addition, a necessary circuit may further be disposed on each board.

It should be understood that the network device 900 shown in FIG. 9 can implement functions of the network device in the method embodiment in FIG. 5. Operations and/or functions of units in the network device 1700 are separately intended to implement corresponding procedures performed by the network device in the foregoing method embodiments of this application. To avoid repetition, detailed descriptions are appropriately omitted herein. The structure of the network device shown in FIG. 9 is merely a possible form, and should not constitute any limitation on embodiments of this application. In this application, a possibility that there may be a network device structure in another form in the future is not excluded.

The CU and DU 1100 may be configured to perform an action that is described in the foregoing method embodiments and that is implemented inside the network device, and the AAU 1000 may be configured to perform an action of sending from the network device to the terminal device and an action of receiving from the terminal device in the foregoing method embodiments. For details, refer to the descriptions in the foregoing method embodiments. Details are not described herein again.

An embodiment of this application further provides a communication system. The communication system includes a terminal device and a network device. The terminal device is configured to perform all or some of the steps performed by the terminal device in the embodiment shown in FIG. 5. The network device is configured to perform all or some of the steps performed by the network device in the embodiment shown in FIG. 5.

Based on the foregoing embodiments, an embodiment of this application further provides a readable storage medium. The readable storage medium stores instructions. When the instructions are executed, the method in any one of the foregoing embodiments is implemented. The readable storage medium may include any medium that can store program code, such as a USB flash drive, a removable hard disk, a read-only memory, a random access memory, a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may be implemented in a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. A communication method, applied to a network device, and comprising:
obtaining a synchronization signal block SSB, wherein the SSB comprises a PBCH signal and a synchronization signal, the PBCH signal is obtained by performing single-carrier modulation on a PBCH, and the synchronization signal is obtained by performing single-carrier modulation on a synchronization sequence; and
sending the SSB.

2. A communication method, applied to a terminal, and comprising:
receiving a synchronization signal block SSB, wherein the SSB comprises a PBCH signal and a synchronization signal, the PBCH signal is obtained by performing single-carrier modulation on a PBCH, and the synchronization signal is obtained by performing single-carrier modulation on a synchronization sequence; and
demodulating the synchronization signal and the PBCH signal.

3. The method according to claim 1 or 2, wherein the PBCH signal is obtained by performing single-carrier modulation on the PBCH by using a first modulation parameter, and the first modulation parameter comprises at least one of the following: a modulation scheme of a symbol carried on the PBCH, a bandwidth of the PBCH signal, a quantity of symbols carried on the PBCH, or a first frequency domain spectrum shaping FDSS parameter.

4. The method according to claim 1, wherein the synchronization signal is obtained in the following manner:
mapping the synchronization sequence into a π/2-BPSK symbol sequence based on a π/2-BPSK modulation mapper; and
performing single-carrier modulation on the π/2-BPSK symbol sequence by using a second modulation parameter, to obtain the synchronization signal, wherein the second modulation parameter comprises at least one of the following: a bandwidth of the synchronization signal or a second FDSS parameter.

5. The method according to any one of claims 1 to 4, wherein when the modulation scheme of the symbol carried on the PBCH is π/2-BPSK modulation, a degree of bandwidth scaling of the synchronization signal is not less than a degree of bandwidth scaling of the PBCH signal; the degree of bandwidth scaling of the synchronization signal is related to the bandwidth of the synchronization signal and a quantity of symbols in the π/2-BPSK symbol sequence to which the synchronization sequence is mapped; and the degree of bandwidth scaling of the PBCH signal is related to the bandwidth of the PBCH signal and the quantity of symbols carried on the PBCH.

6. The method according to claim 1 or 2, wherein a modulation scheme of a symbol carried on the PBCH is π/2-BPSK modulation, the PBCH signal is obtained by performing single-carrier modulation on the PBCH by using a first FDSS parameter, and the synchronization signal is obtained by performing single-carrier modulation on the synchronization sequence by using a second FDSS parameter; and
a degree of bandwidth scaling of the synchronization signal is equal to a degree of bandwidth scaling of the PBCH signal, the first FDSS parameter is the same as the second FDSS parameter, the degree of bandwidth scaling of the synchronization signal is related to a bandwidth of the synchronization signal and a quantity of symbols in a π/2-BPSK symbol sequence to which the synchronization sequence is mapped, and the degree of bandwidth scaling of the PBCH signal is related to a bandwidth of the PBCH signal and a quantity of symbols carried on the PBCH.

7. The method according to any one of claims 1 to 6, wherein the modulation scheme of the symbol carried on the PBCH comprises one of the following: quadrature phase shift keying QPSK modulation, offset quadrature phase shift keying offset-QPSK modulation, or π/2-BPSK modulation.

8. The method according to any one of claims 1 to 7, wherein the synchronization signal is a primary synchronization signal PSS and/or a secondary synchronization signal SSS.

9. The method according to any one of claims 1 to 8, wherein the synchronization signal is a PSS, the synchronization sequence is a first target synchronization sequence among a plurality of preset first synchronization sequences, and a quantity of the plurality of first synchronization sequences is related to a quantity of values of a physical layer cell identity 2; and
the first target synchronization sequence indicates the physical layer cell identity 2.

10. The method according to claim 9, wherein the plurality of first synchronization sequences are obtained by performing different cyclic shift processing on a preset first base synchronization sequence.

11. The method according to claim 10, wherein shift amounts for performing different cyclic shift processing on the preset first base synchronization sequence are related to a length of the first target synchronization sequence and the quantity of the values of the physical layer cell identity 2.

12. The method according to any one of claims 1 to 8, wherein the synchronization signal is an SSS, the synchronization sequence is a second target synchronization sequence among a plurality of preset second synchronization sequences, and a quantity of the plurality of second synchronization sequences is related to a quantity of values of a physical layer cell identity 1; and
the second target synchronization sequence indicates the physical layer cell identity 1.

13. The method according to claim 12, wherein the plurality of second synchronization sequences are obtained by performing different cyclic shift processing on a preset second base synchronization sequence, or the plurality of second synchronization sequences are obtained by performing different cyclic shift processing on a preset third base synchronization sequence and performing different cyclic shift processing on a preset fourth base synchronization sequence.

14. The method according to claim 13, wherein shift amounts for performing different cyclic shift processing on the preset second base synchronization sequence, the preset third base synchronization sequence, and the preset fourth base synchronization sequence are all related to a length of the second target synchronization sequence and the quantity of values of the physical layer cell identity 1.

15. A communication apparatus, comprising a functional module that implements the method according to any one of claims 1 to 14.

16. A communication apparatus, comprising at least one processor and a memory, wherein
the memory is configured to store a computer program or instructions; and
the at least one processor is configured to execute the computer program or the instructions, so that the method according to any one of claims 1 to 14 is performed.

17. A chip system, wherein the chip system comprises a processing circuit, and the processing circuit is coupled to a storage medium; and
the processing circuit is configured to: execute some or all of computer programs or instructions in the storage medium, and implement the method according to any one of claims 1 to 14 when the some or all of the computer programs or the instructions are executed.

18. A computer-readable storage medium, wherein the computer-readable storage medium stores instructions, and when the instructions are executed by a computer, the method according to any one of claims 1 to 14 is performed.

19. A computer program product comprising a computer program or instructions, wherein when the computer program or the instructions are run on a computer, the method according to any one of claims 1 to 14 is performed.
